# EUROPEAN PATENT APPLICATION

(11) **EP 4 296 537 A1**
(43) Date of publication of application: **27.12.2023**
(21) Application number: 22755900.2
(22) Date of filing: 28.01.2022
(51) Int. Cl.: F16G 5/06, F16G 5/20, C08K 5/3445, C08K 7/02, C08L 23/16, C08K 3/06

(54) **TRANSMISSION V-BELT**

(30) Priority: 16.02.2021 JP 2021022748; 18.01.2022 JP 2022005960
(71) Applicant: Mitsuboshi Belting Ltd., Kobe-shi, Hyogo 653-0024 (JP)
(72) Inventor: HAMAMOTO Kouhei, Kobe-shi, Hyogo 653-0024 (JP); NISHIKAWA Naoki, Kobe-shi, Hyogo 653-0024 (JP); HIROSHIMA Takanori, Kobe-shi, Hyogo 653-0024 (JP)
(74) Representative: Hoffmann Eitle
(86) International application number: PCT/JP2022/003448
(87) International publication number: WO 2022/176577

(57) **Abstract**

The present invention relates to a transmission V-belt including a cured product of a first rubber composition, wherein: the first rubber composition comprises a polymer component (A) including an ethylene-α-olefin elastomer, a crosslinking agent (B) including a sulfur-based crosslinking agent, and a staple fiber (C); the staple fiber (C) is oriented in the belt width direction; the rubber hardness (JIS-A) of the cured product is at least 91 degrees; and the breaking elongation of the cured product in the belt longitudinal direction is at least 100%.

## Description

### TECHNICAL FIELD

The present invention relates to a power transmission V-belt including a cured product of a rubber composition containing an ethylene-α-olefin elastomer.

### BACKGROUND ART

A V-belt for transmitting power by friction transmission includes a raw-edge type (raw-edge V-belt) that is a rubber layer in which a friction transmission surface (V-shaped side surface) is exposed, and a wrapped type (wrapped V-belt) in which a friction transmission surface (V-shaped side surface) is covered with a cover fabric, and is selectively used according to applications depending on a difference in surface properties (friction coefficient between the rubber layer and the cover fabric) of the friction transmission surface. Examples of the raw-edge type belt include a raw-edge V-belt in which cogs are not provided, a raw-edge cogged V-belt in which cogs are provided only on a lower surface (inner circumferential surface) of the belt to improve bendability, and a raw-edge cogged V-belt (raw-edge double cogged V-belt) in which cogs are provided on both a lower surface (inner circumferential surface) and an upper surface (outer circumferential surface) of the belt to improve bendability.

These V-belts are used in a wide range of fields such as automobiles and industrial machines. Among them, a V-belt used in a belt-type transmission mounted on a motorcycle, a snowmobile, a large agricultural machine, or the like is called a variable speed belt.

The V-belt is used at a high load due to an increase in transmission capacity, an increase in size of a device, a high horsepower, or the like. Therefore, in order to prevent buckling deformation (dishing) of the V-belt, it is required to increase rigidity (lateral pressure resistance) in a belt width direction.

In particular, the variable speed belt is required to have high lateral pressure resistance that can withstand severe movement in sliding with a pulley. For example, a large V-belt used in a power transmission mechanism (in particular, a belt-type transmission) of the largest agricultural machine has a size of a standard product, which is a belt equivalent to HL to HQ (designation described in ISO3410:1989) and has a belt width (upper width) of 44.5 mm to 76.2 mm and a belt thickness of 19.8 mm to 30.5 mm among standard products of American Society of Agricultural and Biological Engineers (ASABE), and also has a size of, for example, a non-standard product having a belt thickness of 36 mm. In such a large agricultural machine, it is necessary to apply very high tension to the V-belt in order to transmit a large load, and accordingly, a lateral pressure received by the V-belt from the pulley becomes very high.

Further, since the variable speed belt is at a low temperature at the time of starting and reaches a high temperature due to being exposed to heat generated by an engine during driving, a rubber composition capable of withstanding a wide temperature range from a low temperature to a high temperature is required. The variable speed belt is required to have high adhesiveness for preventing peeling between the rubber composition and a fiber member such as a core wire or a reinforcing fabric, and bending fatigue resistance that can withstand stress concentration on a cog valley due to repetition of winding on and releasing from a pulley. Further, it is required to have a high wear resistance that can withstand wear due to contact with the pulley. It is very difficult to meet these demands with large V-belts in related art.

As described above, in order to respond to various demands to a power transmission V-belt, a power transmission V-belt using various rubber compositions containing a chloroprene rubber and an ethylene-α-olefin elastomer as polymer components has been proposed.

For example, JP2012-241831A (Patent Literature 1) discloses a power transmission belt in which a compression rubber layer includes a fatty acid amide and short fibers. Examples of the rubber component include a chloroprene rubber and an ethylene-α-olefin elastomer, and examples of a vulcanizing agent or a crosslinking agent include a metal oxide, an organic peroxide, and a sulfur-based vulcanizing agent. In Examples, a raw-edge cogged V-belt is produced using a rubber composition containing a chloroprene rubber and sulfur. An example (Example 7) in which hardness of the rubber composition is 94° and an elongation at break in a direction perpendicular to the short fibers is 70%, examples (Examples 1 to 6) in which the hardness of the rubber composition is 86° to 88° and the elongation at break in the direction perpendicular to the short fibers is 180% to 245%, and the like are described.

JP2009-52740A (Patent Literature 2) discloses a V-belt in which a compression rubber layer is formed of an organic peroxide-based crosslinked product of a rubber composition including 5 to 50 parts by mass of short fibers containing 5 to 40 parts by mass of poly(p-phenylene benzobisoxazole) (PBO) short fibers with respect to 100 parts by mass of ethylene-α-olefin rubber having an ethylene content of 40 mass% to 70 mass%, and the compression rubber layer has an elongation at break in a belt longitudinal direction of 70% or more. It is described that the elongation at break in the belt longitudinal direction is preferably 70% or more, and more preferably 200% or more, and when the belt has such physical properties, cracks of the belt are less likely to occur, and a belt having a longer service life can be obtained. In addition, it is described that the hardness (JIS-A) of the crosslinked rubber composition may be in a range of 85 to 93, and when the JIS-A hardness is 85 or more, the wear resistance of the belt can be greatly improved by blending the PBO short fibers, and that if the hardness (JIS-A) is more than 93, the belt becomes too hard, and cracks are likely to occur due to repeated bending of the belt, which is not preferable. In the document, it is essential that the crosslinking agent is an organic peroxide, and an example of crosslinking with sulfur is described as a comparative example.

JP2018-141554A (Patent Literature 3) discloses a power transmission belt containing a cured product of a rubber composition containing a rubber component containing an ethylene-α-olefin elastomer, an α, β-unsaturated carboxylic acid metal salt, magnesium oxide, an organic peroxide, and an inorganic filler, in which a proportion of the magnesium oxide is 2 to 20 parts by mass with respect to 100 parts by mass of the rubber component, and is 5 parts by mass or more with respect to 100 parts by mass of the α, β-unsaturated carboxylic acid metal salt. It is described that with such a configuration, the hardness and modulus of the cured product of the rubber composition for a power transmission belt can be increased without impairing cold resistance, heat resistance, adhesiveness, bending fatigue resistance, and wear resistance. In addition, it is described that rubber hardness (JIS-A) of the cured product of the rubber composition may be 90 degrees to 100 degrees. Also in the document, it is essential that the crosslinking agent is an organic peroxide, and the crosslinking with sulfur is not considered.

### CITATION LIST

### PATENT LITERATURE

Patent Literature 1: JP2012-241831A
Patent Literature 2: JP2009-52740A
Patent Literature 3: JP2018-141554A

### SUMMARY OF INVENTION

### TECHNICAL PROBLEM

As is apparent from Patent Literatures 1 to 3, in the related art, a chloroprene rubber is generally crosslinked with sulfur, and an ethylene-α-olefin elastomer is generally crosslinked with an organic peroxide. The reason for this is that a chloroprene rubber having a double bond in a main chain is easily crosslinked with sulfur, and the cured product crosslinked with sulfur exhibits excellent physical properties. On the other hand, an ethylene-α-olefin elastomer having no double bond in the main chain is not effectively crosslinked with sulfur, and the physical properties of the cured product are not sufficiently improved. In order to increase the physical properties of the cured product of ethylene-α-olefin elastomer, an organic peroxide is effective, but an ethylene-α-olefin elastomer crosslinked with the organic peroxide tends to become brittle, and when the ethylene-α-olefin elastomer is applied to a power transmission V-belt, there is a problem that cracks are easily generated, and improvement is required. In particular, as in the configuration disclosed in Patent Literature 3, there is a trade-off relationship in which generation of cracks is promoted when the hardness and modulus are increased by the α, β-unsaturated carboxylic acid metal salt and magnesium oxide, and it is difficult to sufficiently improve a service life of the power transmission V-belt.

Therefore, an object of the present invention is to improve bending fatigue resistance to prevent generation of cracks and improve a belt life while ensuring lateral pressure resistance, wear resistance, and adhesiveness to a fiber member such as short fibers in a power transmission V-belt containing a cured product of a rubber composition containing an ethylene-α-olefin elastomer as a polymer component.

### SOLUTION TO PROBLEM

As a result of intensive studies to achieve the above object, the present inventors have found that it is possible to provide a power transmission V-belt capable of improving bending fatigue resistance to prevent generation of cracks and improving a belt life while ensuring lateral pressure resistance, wear resistance, and adhesiveness to a fiber member such as short fibers by adjusting rubber hardness and an elongation at break of a cured product of a rubber composition in which a polymer component (A) containing an ethylene-α-olefin elastomer, a crosslinking agent (B) containing a sulfur-based crosslinking agent, and short fibers (C) are combined and the short fibers (C) are oriented in a belt width direction within a specific range, and have completed the present invention.

That is, the power transmission V-belt of the present invention is a power transmission V-belt including a cured product of a first rubber composition, in which the first rubber composition includes a polymer component (A) including an ethylene-α-olefin elastomer, a crosslinking agent (B) including a sulfur-based crosslinking agent, and short fibers (C), the short fibers (C) are oriented in a belt width direction, the cured product has a rubber hardness (JIS-A) of 91 degrees or more, and the cured product has an elongation at break in a belt longitudinal direction of 100% or more. In the power transmission V-belt, matrix rubber hardness (JIS-A) of a cured product of a rubber composition obtained by removing the short fibers (C) from the rubber composition may be 83 degrees or more. The first rubber composition may further include a crosslinking accelerator (D). The crosslinking accelerator (D) may include a sulfur-containing crosslinking accelerator. The sulfur-containing crosslinking accelerator may include a sulfur-containing crosslinking accelerator having an oxygen-and-nitrogen-containing heterocycle. The first rubber composition may further include a co-crosslinking agent (E). The co-crosslinking agent (E) may include a bismaleimide compound. The first rubber composition may further include an adhesiveness improver (F). A proportion of the sulfur-based crosslinking agent may be 1.2 parts by mass or more with respect to 100 parts by mass of the polymer component (A). The first rubber composition may further include a softener (G). A proportion of the softener (G) may be 0.1 to 10 parts by mass with respect to 100 parts by mass of the polymer component (A). The power transmission V-belt may include a compression rubber layer and/or a tension rubber layer which are formed of the cured product of the first rubber composition. The power transmission V-belt may further include an adhesive rubber layer formed of a cured product of a second rubber composition, and the second rubber composition may include a polymer component (a) containing an ethylene-α-olefin elastomer and a crosslinking agent (b) containing a sulfur-based crosslinking agent. The power transmission V-belt may be a raw-edge cogged V-belt having cogs on at least an inner circumferential surface side. The power transmission V-belt may be a variable speed belt. An average thickness of an entire belt of the power transmission V-belt may be 19.8 mm to 36 mm. The power transmission V-belt may be a raw-edge type V-belt used in a layout including reverse bending.

### ADVANTAGEOUS EFFECTS OF INVENTION

In the power transmission V-belt of the present invention, hardness and an elongation at break of a cured product of a rubber composition in which a polymer component (A) containing an ethylene-α-olefin elastomer, a crosslinking agent (B) containing a sulfur-based crosslinking agent, and short fibers (C) are combined and the short fibers (C) are oriented in a belt width direction are adjusted within a specific range. Therefore, the bending fatigue resistance can be improved to prevent generation of cracks and a belt life can be improved while ensuring lateral pressure resistance, wear resistance, and adhesiveness to a fiber member such as short fibers. In particular, since the power transmission V-belt of the present invention is excellent in bending fatigue resistance, it is possible to effectively prevent occurrence of cracks even in a case where the power transmission V-belt is used in a layout including "reverse bending" in which a back side of the power transmission V-belt is bent inward. Further, a variable speed belt of a large agricultural machine, which has a large thickness and requires high horsepower, requires high lateral pressure resistance and bending fatigue resistance, but the power transmission V-belt of the present invention can exhibit high durability to improve a belt life. Therefore, the power transmission V-belt of the present invention is preferably used for a variable speed belt, and is most suitable for use as a variable speed belt for a large agricultural machine.

### BRIEF DESCRIPTION OF DRAWINGS

FIG. 1 is a schematic partial cross-sectional perspective view illustrating an example of a power transmission V-belt (raw-edge cogged V-belt) of the present invention.
FIG. 2 is a schematic cross-sectional view of the power transmission V-belt of FIG. 1 cut in a belt longitudinal direction.
FIG. 3 is a schematic perspective view for explaining a method for measuring 8% bending stress of a crosslinked rubber molded article obtained in Examples.
FIG. 4 is a schematic perspective view of a double cogged V-belt prepared in Examples.
FIG. 5 is a schematic view illustrating a layout of a biaxial durability running test of the power transmission V-belt obtained in Examples.
FIG. 6 is a schematic view illustrating a layout of a reverse bending durability running test of the power transmission V-belt obtained in Examples.
FIG. 7 is a schematic view for explaining a method of measuring a reverse bending crack test of the power transmission V-belt obtained in Examples.

### DESCRIPTION OF EMBODIMENTS

### [Rubber Composition]

A power transmission V-belt of the present invention contains a cured product of a rubber composition (first rubber composition) containing a polymer component (A) containing an ethylene-α-olefin elastomer, a crosslinking agent (B) containing a sulfur-based crosslinking agent, and short fibers (C).

### (A) Polymer Component

The polymer component (A) contains an ethylene-α-olefin elastomer (first ethylene-α-olefin elastomer) in terms of excellent cold resistance, heat resistance, and weather resistance.

The ethylene-α-olefin elastomer contains, as a structural unit, an ethylene unit, and an α-olefin unit, and may further contain a diene unit. Therefore, examples of the ethylene-α-olefin elastomer includes an ethylene-α-olefin copolymer rubber, an ethylene-α-olefin-diene terpolymer rubber, and the like.

Examples of α-olefins for forming the α-olefin unit include linear α-C₃₋₁₂ olefins such as propylene, butene, pentene, methylpentene, hexene, and octene. Among these α-olefins, an α-C₃₋₄ olefin (particularly propylene) such as propylene is preferable.

As a diene monomer for forming the diene unit, a non-conjugated diene monomer is generally used. Examples of the non-conjugated diene monomer include dicyclopentadiene, methylene norbornene, ethylidene norbornene, 1,4-hexadiene, and cyclooctadiene. Among these diene monomers, ethylidene norbornene and 1,4-hexadiene (particularly, ethylidene norbornene) are preferable.

Examples of the representative ethylene-α-olefin elastomer include an ethylene-α-olefin rubber [such as ethylene-propylene rubber (EPM), ethylene-butene rubber (EBM), and ethylene-octene rubber (EOM)] and an ethylene-α-olefin-diene rubber [ethylene-propylene-diene terpolymer (EPDM)].

These ethylene-α-olefin elastomers may be used alone or in combination of two or more kinds thereof. Among these, from the viewpoint of excellent cold resistance, heat resistance, and weather resistance, an ethylene-α-olefin-diene terpolymer rubber such as an ethylene-α-C₃₋₄ olefin-diene terpolymer rubber is preferable, and EPDM is particularly preferable. Therefore, a proportion of EPDM may be 50 mass% or more, preferably 80 mass% or more, and more preferably 90 mass% or more (particularly 95 mass% or more) with respect to the entire ethylene-α-olefin elastomer, and may be 100 mass% (only EPDM).

In the ethylene-α-olefin elastomer, a ratio (mass ratio) of ethylene and α-olefin is the former/latter = 40/60 to 90/10, preferably 45/55 to 85/15 (for example, 50/50 to 80/20), and more preferably 52/48 to 70/30. In particular, in the ethylene-propylene-diene terpolymer, a ratio (mass ratio) of ethylene and propylene may be the former/latter = 35/65 to 90/10, preferably 40/60 to 80/20, more preferably 45/55 to 70/30, and most preferably 50/50 to 60/40.

A diene content of the ethylene-α-olefin elastomer (particularly, ethylene-α-olefin-diene terpolymer rubber such as EPDM) may be 15 mass% or less (for example, 0.1 mass% to 15 mass%), preferably 10 mass% or less (for example, 0.3 mass% to 10 mass%), more preferably 5 mass% or less (for example, 0.5 mass% to 5 mass%), more preferably 4 mass% or less (for example, 1 mass% to 4 mass%), and most preferably 3 mass% or less (for example, 1 mass% to 3 mass%). If the diene content is too large, high heat resistance may not be ensured.

In the present application, the diene content refers to a mass ratio of a diene monomer unit in all units constituting the ethylene-α-olefin elastomer, can be measured by a commonly-used method, and may be a ratio based on the monomer.

The iodine value of the ethylene-α-olefin elastomer containing the diene unit is, for example, 3 to 40, preferably 5 to 30, and more preferably 10 to 20. If the iodine value is too small, the crosslinking of the rubber composition becomes insufficient, and wear and adhesion tend to occur. Conversely, if the iodine value is too large, the rubber composition has a shorter scorch time and becomes difficult to handle, and heat resistance tends to decrease.

In the present application, the iodine value of the ethylene-α-olefin elastomer can be measured by a commonly-used method, and can be measured by, for example, infrared spectroscopy.

A Mooney viscosity [ML(1 + 4)125°C] of an uncrosslinked ethylene-α-olefin elastomer may be 80 or less, for example, 10 to 80, preferably 20 to 70, more preferably 30 to 50, and most preferably 35 to 45. If the Mooney viscosity is too large, fluidity of the rubber composition may be lowered, and processability in kneading may be lowered.

In the present application, the Mooney viscosity can be measured by a method in accordance with JIS K 6300-1(2013), and test conditions are a test temperature of 125°C, preheating of 1 minute, and a rotor operating time of 4 minutes using an L-shaped rotor.

A proportion of the ethylene-α-olefin elastomer in the polymer component (A) may be 50 mass% or more, preferably 80 mass% or more, more preferably 90 mass% or more, most preferably 100 mass% (only ethylene-α-olefin elastomer). When the proportion of the ethylene-α-olefin elastomer in the polymer component is too small, heat resistance and cold resistance may be lowered.

As long as effects of the present invention are not impaired, the polymer component (A) may contain, in addition to the ethylene-α-olefin elastomer, other rubber components such as a diene rubber [for example, a natural rubber, an isoprene rubber, a butadiene rubber, a chloroprene rubber, a styrene-butadiene rubber (SBR), a vinylpyridine-styrene-butadiene copolymer rubber, an acrylonitrile-butadiene rubber (nitrile rubber), a hydrogenated product of the diene rubber such as a hydrogenated nitrile rubber (examples thereof including a mixed polymer of a hydrogenated nitrile rubber and an unsaturated carboxylic acid metal salt), and the like], an olefin rubber (for example, a polyoctenylene rubber, an ethylene-vinyl acetate copolymer rubber, a chlorosulfonated polyethylene rubber, an alkylated chlorosulfonated polyethylene rubber, and the like), an epichlorohydrin rubber, an acrylic rubber, a silicone rubber, a urethane rubber, a fluorine rubber, and the like.

A proportion of other rubber components may be 50 mass% or less, preferably 20 mass% or less, and more preferably 10 mass% or less in the polymer component (A).

### (B) Crosslinking Agent (Vulcanizing Agent)

The crosslinking agent (B) contains a sulfur-based crosslinking agent (first sulfur-based crosslinking agent). In the related art, an organic peroxide is used as a crosslinking agent for an ethylene-α-olefin elastomer, but in the present invention, it is possible to improve bending fatigue resistance (crack resistance) of a cured product by crosslinking the ethylene-α-olefin elastomer using the sulfur-based crosslinking agent.

Examples of the sulfur-based crosslinking agent include powdered sulfur, precipitated sulfur, colloidal sulfur, insoluble sulfur, highly dispersible sulfur, and sulfur chloride (sulfur monochloride, sulfur dichloride, and the like). These sulfur-based crosslinking agents may be used alone or in combination of two or more kinds thereof. Among these, powdered sulfur, precipitated sulfur, colloidal sulfur, insoluble sulfur, and highly dispersible sulfur are preferable, and powdered sulfur is particularly preferable.

A proportion of the sulfur-based crosslinking agent can be selected from a range of, for example, about 1 to 10 parts by mass with respect to 100 parts by mass of the polymer component (A). The proportion of the sulfur-based crosslinking agent is preferably 1.2 parts by mass or more with respect to 100 parts by mass of the polymer component (A), and is, for example, 1.2 to 5 parts by mass, preferably 1.3 to 3 parts by mass, more preferably 1.5 to 2.5 parts by mass, still more preferably 1.6 to 2.3 parts by mass, and most preferably 1.8 to 2.2 parts by mass. If the proportion of the sulfur-based crosslinking agent is too small, the rubber hardness, the lateral pressure resistance, and the wear resistance may deteriorate. If the proportion is too large, the bending fatigue resistance may deteriorate, and bloom (precipitation on a surface) may occur.

The crosslinking agent (B) may further contain an organic peroxide as another crosslinking agent (or a vulcanizing agent). Examples of the organic peroxide include organic peroxides generally used for crosslinking of rubber and resin, such as diacyl peroxide, peroxy ester, and dialkyl peroxide (for example, dicumyl peroxide, t-butyl cumyl peroxide, 1,1-di-butylperoxy-3,3,5-trimethylcyclohexane, 2,5-dimethyl-2,5-di(t-butylperoxy)-hexane, 1,3-bis(t-butylperoxy-isopropyl)benzene, di-t-butyl peroxide, and the like). These organic peroxides can be used alone or in combination of two or more kinds thereof. Further, as the organic peroxide, a peroxide having a decomposition temperature of about 150°C to 250°C (for example, 175°C to 225°C) capable of obtaining a half-life of 1 minute by thermal decomposition is preferable.

A proportion of the organic peroxide may be 100 parts by mass or less, preferably 50 parts by mass or less, more preferably 30 parts by mass or less, and still more preferably 10 parts by mass or less with respect to 100 parts by mass of the sulfur-based crosslinking agent. If the proportion of the organic peroxide is too large, the bending fatigue resistance of the cured product may deteriorate. The crosslinking agent (B) is particularly preferably substantially free of an organic peroxide, and most preferably does not contain an organic peroxide.

A proportion of the sulfur-based crosslinking agent in the crosslinking agent (B) may be 50 mass% or more, preferably 70 mass% or more, more preferably 90 mass% or more, and still more preferably 100 mass%. If the proportion of the sulfur-based crosslinking agent is too small, the bending fatigue resistance of the cured product may deteriorate.

A proportion of the crosslinking agent (B) can be selected from a range of, for example, about 1 to 10 parts by mass with respect to 100 parts by mass of the polymer component (A), and is, for example, 1.2 to 10 parts by mass, preferably 1.3 to 8 parts by mass, more preferably 1.5 to 5 parts by mass, still more preferably 1.6 to 3 parts by mass, and most preferably 1.8 to 2.5 parts by mass.

### (C) Short Fibers

Examples of the short fibers (C) include: synthetic fibers such as polyolefin fibers (for example, polyethylene fibers, polypropylene fibers, and the like), polyamide fibers (for example, aliphatic polyamide fibers such as polyamide 6 fibers, polyamide 66 fibers, and polyamide 46 fibers, aramid fibers, and the like), polyalkylene arylate fibers [for example, poly C₂₋₄ alkylene C₆₋₁₄ arylate fibers such as polyethylene terephthalate (PET) fibers and polyethylene naphthalate (PEN) fibers), vinylon fibers, polyvinyl alcohol fibers, and poly(p-phenylene benzobisoxazole) (PBO) fibers; natural fibers such as cotton, hemp, and wool; and inorganic fibers such as carbon fibers.

These short fibers may be used alone or in combination of two or more kinds thereof. Among these short fibers, the synthetic fibers (for example, polyamide fibers, polyalkylene allylate fibers, and the like) are widely used, and the polyamide fibers are preferable. Short fibers containing at least the aramid fibers are more preferable because the short fibers are rigid, have high strength and modulus, and are easy to protrude from a surface, and a combination of the aramid fibers and the aliphatic polyamide fibers is more preferable from the viewpoint of an excellent balance of various properties. The aramid fibers are commercially available, for example, as trade names of "Conex", "Nomex", "Kevlar", "Technora", "Twaron", and the like.

In the case where the short fibers are the combination of the aramid fibers and the aliphatic polyamide fibers, a proportion of the aliphatic polyamide fibers may be 100 parts by mass or less, for example, 1 to 100 parts by mass, preferably 5 to 80 parts by mass, more preferably 10 to 70 parts by mass, and still more preferably 30 to 60 parts by mass with respect to 100 parts by mass of the aramid fibers. If the proportion of the aliphatic polyamide fibers is too large, rigidity of the cured product may be lowered.

Average fineness of the short fibers (C) is, for example, 0.1 dtex to 50 dtex, preferably 1 dtex to 10 dtex, more preferably 1.5 dtex to 5 dtex, and more preferably 2 dtex to 3 dtex. If the average fineness is too large, mechanical properties of the cured product of the rubber composition may deteriorate, and if the average fineness is too small, it may be difficult to uniformly disperse the short fibers.

An average length of the short fibers (C) is, for example, 1 mm to 20 mm, preferably 1.2 mm to 15 mm (for example, 1.5 mm to 10 mm), more preferably 2 mm to 5 mm, and more preferably 2.5 mm to 4 mm. If the average length of the short fibers is too small, the mechanical properties (for example, modulus) in an orientation direction (grain direction) of the short fibers may not be sufficiently enhanced. On the other hand, if the average length is too large, dispersibility of the short fibers in the rubber composition may be lowered, and the bending fatigue resistance may be lowered.

From the viewpoint of dispersibility and adhesiveness of the short fibers in the rubber composition, at least the short fibers are preferably subjected to an adhesion treatment (or surface treatment). It is unnecessary for all the short fibers to be subjected to the adhesion treatment, and the short fibers subjected to the adhesion treatment and the short fibers not subjected to the adhesion treatment (untreated short fibers) may be mixed or used in combination.

In the adhesion treatment of the short fibers (C), various adhesion treatments can be performed with, for example, a treatment liquid containing an initial condensate (such as a prepolymer of a novolac or resol type phenol resin) of phenols and formalin, a treatment liquid containing a rubber component (or a latex), a treatment liquid containing the initial condensate and the rubber component (latex), a treatment liquid containing a reactive compound (adhesive compound) such as a silane coupling agent, an epoxy compound (such as an epoxy resin), and an isocyanate compound. In a preferred adhesion treatment, the short fibers are treated with the treatment liquid containing the initial condensate and the rubber component (latex), particularly at least a resorcin-formalin-latex (RFL) liquid. These treatment liquids may be used in combination, and for example, the short fibers may be pretreated with a commonly-used adhesive component, for example, the reactive compound (adhesive compound) such as an epoxy compound (such as an epoxy resin) or an isocyanate compound, and then treated with an RFL liquid.

A proportion of the short fibers (C) is, for example, 5 to 100 parts by mass, preferably 10 to 50 parts by mass, more preferably 20 to 40 parts by mass, and still more preferably 25 to 35 parts by mass with respect to 100 parts by mass of the polymer component (A). If the proportion of the short fibers is too small, the mechanical properties of the cured product of the rubber composition may deteriorate. On the other hand, if the proportion is too large, uniform dispersion may be difficult, and the bending fatigue resistance or the like may deteriorate.

In the present invention, since the short fibers (C) are oriented in the belt width direction and the grain direction of the short fibers (C) is the belt width direction, the hardness and rigidity of the polymer component (A) can be improved, and the lateral pressure resistance of the belt can be improved.

In the present application, the "grain direction" may be not only a longitudinal direction of the short fibers but also a direction within ±5° to the longitudinal direction. Therefore, the "grain direction" may be also referred to as a "direction substantially parallel to the longitudinal direction of the short fibers", and "the grain direction is the belt width direction" may be also referred to as "the grain direction is substantially parallel to the belt width direction".

### (D) Crosslinking Accelerator

The rubber composition may further contain a crosslinking accelerator (D). From the viewpoint that an effect of promoting crosslinking is great in a combination with the sulfur-based crosslinking agent, the crosslinking accelerator (D) preferably contains a sulfur-containing crosslinking accelerator (first sulfur-containing crosslinking accelerator).

Examples of the sulfur-containing crosslinking accelerator include thiuram accelerators [for example, tetramethylthiuram monosulfide (TMTM), tetramethylthiuram disulfide (TMTD), tetraethylthiuram disulfide (TETD), tetrabutylthiuram disulfide (TBTD), dipentamethylenethiuram tetrasulfide (DPTT), and the like], sulfenamide accelerators [for example, N-cyclohexyl-2-benzothiazyl sulfenamide (CBS), N-t-butyl-2-benzothiazyl sulfenamide (TBBS), and the like], thiomorpholine accelerators [for example, 4,4'-dithiomorpholine (DTDM), 2- (4'-morpholinodithio) benzothiazole, and the like], thiazole accelerators [for example, 2-mercaptobenzothiazole (MBT), zinc salt of MBT, 2-mercaptobenzothiazole dibenzothiazyl disulfide (MBTS), and the like], thiourea accelerators [for example, ethylene thiourea, trimethylthiourea (TMU), diethylthiourea (EDE), and the like], dithiocarbamate accelerators [for example, sodium dimethyldithiocarbamate, zinc diethyldithiocarbamate (EZ), zinc dibutyldithiocarbamate (BZ), and the like], and xanthogenate accelerators (for example, zinc isopropylxanthate and the like).

These sulfur-containing crosslinking accelerators may be used alone or in combination of two or more kinds thereof. Among these sulfur-based crosslinking accelerators, a sulfur-containing crosslinking accelerator containing a sulfur-containing crosslinking accelerator (particularly, a thiomorpholine accelerator) having an oxygen-and-nitrogen-containing heterocycle such as oxazole, furazan, and morpholine is preferable from the viewpoint that the hardness of the cured product can be improved while preventing occurrence of scorch.

The sulfur-containing crosslinking accelerator containing the sulfur-containing crosslinking accelerator having the oxygen-and-nitrogen-containing heterocycle may be a combination of the sulfur-containing crosslinking accelerator (particularly, the thiomorpholine accelerator) having the oxygen-and-nitrogen-containing heterocycle and another sulfur-containing crosslinking accelerator (particularly, a thiuram accelerator and/or a sulfenamide accelerator), and a mass ratio of the two is the former/latter = 99/1 to 10/90, preferably 95/5 to 20/80, more preferably 90/10 to 30/70, still more preferably 80/20 to 50/50, and most preferably 70/30 to 60/40.

The crosslinking accelerator (D) may further contain a sulfur-free crosslinking accelerator in addition to the sulfur-containing crosslinking accelerator.

Examples of the sulfur-free crosslinking accelerator include guanidine accelerators [for example, diphenylguanidine (DPG), diorthotolylguanidine (DOTG), and the like], aldehyde-amine or aldehyde-ammonia accelerators [for example, hexamethylenetetramine and the like], and the like.

A proportion of the sulfur-free crosslinking accelerator may be 100 parts by mass or less, preferably 50 parts by mass or less, more preferably 30 parts by mass or less, and still more preferably 10 parts by mass or less with respect to 100 parts by mass of the sulfur-containing crosslinking accelerator. If the proportion of the sulfur-free crosslinking accelerator is too large, an effect of preventing scorch may be reduced.

A proportion of the sulfur-containing crosslinking accelerator in the crosslinking accelerator (D) may be 50 mass% or more, preferably 70 mass% or more, more preferably 90 mass% or more, and still more preferably 100 mass%. If the proportion of the sulfur-containing crosslinking accelerator is too small, the effect of preventing scorch may be reduced.

A proportion of the crosslinking accelerator (D) can be selected from a range of, for example, about 0.1 to 10 parts by mass with respect to 100 parts by mass of the polymer component (A), and is, for example, 0.5 to 8 parts by mass, preferably 1 to 7 parts by mass, more preferably 1.5 to 5 parts by mass, still more preferably 2 to 4 parts by mass, and most preferably 2.5 to 3.5 parts by mass.

A proportion of the sulfur-containing crosslinking accelerator having the oxygen-and-nitrogen-containing heterocycle is, for example, 0.1 to 5 parts by mass, preferably 0.3 to 4 parts by mass, more preferably 0.5 to 3 parts by mass, still more preferably 1 to 2.5 parts by mass, and most preferably 1.5 to 2 parts by mass with respect to 100 parts by mass of the polymer component (A).

### (E) Co-crosslinking Agent (Crosslinking Aid)

The rubber composition may further contain a co-crosslinking agent (E). From the viewpoint of improving the lateral pressure resistance and the wear resistance, the co-crosslinking agent (E) preferably contains a bismaleimide compound.

Examples of the bismaleimide compound include aliphatic bismaleimide (for example, N,N'-1,2-ethylene dimaleimide, 1,6-bismaleimide-(2,2,4-trimethyl) cyclohexane, and the like), aromatic bismaleimide {for example, N,N'-m-phenylene dimaleimide, 4-methyl-1,3-phenylene dimaleimide, 4,4'-diphenylmethane dimaleimide, 2,2-bis[4-(4-maleimidophenoxy)phenyl]propane, 4,4'-diphenyl ether dimaleimide, 4,4'-diphenylsulfone dimaleimide, 1,3-bis(3-maleimidophenoxy)benzene, and the like)}, and the like.

These bismaleimide compounds may be used alone or in combination of two or more kinds thereof. Among these, the aromatic bismaleimide (arene bismaleimide) such as N,N'-m-phenylene dimaleimide is preferable from the viewpoint of excellent heat resistance.

The co-crosslinking agent (E) may further contain other co-crosslinking agents in addition to the bismaleimide compound.

Examples of other co-crosslinking agents include polyfunctional (iso)cyanurates [for example, triallyl isocyanurate (TAIC), triallyl cyanurate (TAC), and the like], polydienes (for example, 1,2-polybutadiene and the like), α, β-unsaturated carboxylic acid metal salts [for example, zinc (meth)acrylate, magnesium (meth)acrylate, and the like], oximes (for example, quinone dioxime and the like), guanidines (for example, diphenylguanidine and the like), polyfunctional (meth) acrylates [for example, ethylene glycol di(meth)acrylate, butanediol di(meth)acrylate, trimethylolpropane tri(meth)acrylate, and the like], and the like.

A proportion of other co-crosslinking agents may be 100 parts by mass or less, preferably 50 parts by mass or less, more preferably 30 parts by mass or less, and still more preferably 10 parts by mass or less with respect to 100 parts by mass of the bismaleimide compound. If the proportion of other co-crosslinking agents is too large, an effect of improving the lateral pressure resistance and the wear resistance may be reduced. From the viewpoint of improving the bending fatigue resistance, the co-crosslinking agent (E) is particularly preferably substantially free of the α, β-unsaturated carboxylic acid metal salt such as zinc (meth)acrylate, and most preferably does not contain the α, β-unsaturated carboxylic acid metal salt, among other co-crosslinking agents.

A proportion of the bismaleimide compound in the co-crosslinking agent (E) may be 50 mass% or more, preferably 70 mass% or more, more preferably 90 mass% or more, and still more preferably 100 mass%. If the proportion of the bismaleimide compound is too small, the effect of improving the lateral pressure resistance and the wear resistance may be reduced.

A proportion of the co-crosslinking agent (E) can be selected from a range of, for example, about 0.1 to 10 parts by mass with respect to 100 parts by mass of the polymer component (A), and is, for example, 0.3 to 8 parts by mass, preferably 0.5 to 5 parts by mass, more preferably 0.8 to 4 parts by mass, still more preferably 1 to 3 parts by mass, and most preferably 1.5 to 2.5 parts by mass. If the proportion of the co-crosslinking agent (E) is too small, the wear resistance may deteriorate, and if the proportion is too large, the bending fatigue resistance may deteriorate.

### (F) Adhesiveness Improver

The rubber composition may further contain an adhesiveness improver (F) from the viewpoint of improving the adhesiveness between the polymer component (A) and the fiber member (short fibers (C), a core body described later, a reinforcing fabric described later, and the like).

Examples of the adhesiveness improver (F) include a resorcinol-formaldehyde resin (condensate of resorcin and formaldehyde), an amino resin [condensate of a nitrogen-containing cyclic compound and formaldehyde, for example, a melamine resin such as hexamethylol melamine and hexa(alkoxymethyl)melamine (hexa(methoxymethyl)melamine, hexa(butoxymethyl)melamine, and the like), a urea resin such as methylol urea, a benzoguanamine resin such as a methylol benzoguanamine resin, and the like], and a co-condensate thereof (such as a resorcin-melamine-formaldehyde co-condensate), and the like. The resorcinol-formaldehyde resin, the amino resin, and the co-condensate may be an initial condensate (prepolymer) of a nitrogen-containing cyclic compound such as resorcin and/or melamine and formaldehyde.

These adhesiveness improvers (F) may be used alone or in combination of two or more kinds thereof. Among these, the resorcinol-formaldehyde resin and the melamine resin are preferable, and the resorcinol-formaldehyde resin is particularly preferable.

A proportion of the adhesiveness improver (F) can be selected from a range of, for example, about 0.1 to 10 parts by mass with respect to 100 parts by mass of the polymer component (A), and is, for example, 0.3 to 8 parts by mass, preferably 0.5 to 5 parts by mass, more preferably 0.8 to 4 parts by mass, still more preferably 1 to 3 parts by mass, and most preferably 1.5 to 2.5 parts by mass.

### (G) Softener (Oils)

The rubber composition may further contain a softener (G) as oils (oil component) from the viewpoint of improving the bending fatigue resistance. The softener (G) may be a plasticizer.

Examples of the softener (G) include a mineral oil-based softener {for example, a petroleum-based softener [paraffinic oil, alicyclic oil (naphthenic oil), aromatic oil, and the like], a coal tar-based softener [coal tar, a coumarone-indene resin, and the like], and the like}, a vegetable oil-based softener {for example, a fatty oil-based softener [fatty acids such as stearic acid and metal stearates or metal salts thereof, fatty acid esters such as stearic acid esters, fatty acid amides such as stearic acid amide, fatty oils, and the like], a pine tree-derived softener [pine tar, rosin, sub (factice), and the like], and the like}, a synthetic softener {for example, a synthetic resin softener [hydrocarbon synthetic oil (low molecular weight paraffin, low molecular weight wax, phenolic aldehyde resin, liquid ethylene-α-olefin copolymer, and the like), a liquid rubber (liquid polybutene, liquid polybutadiene, liquid isoprene rubber, and the like), and the like], a synthetic plasticizer (phthalic acid diester such as dioctyl phthalate, a polyester plasticizer, a C₆₋₁₈ alkane dicarboxylic acid ester such as dioctyl sebacate, and the like), and the like].

Those softeners (G) may be used alone or in combination of two or more kinds thereof. Among these, the petroleum-based softener such as paraffinic oil and C₈₋₂₄ fatty acids (including metal salts, esters, and amides thereof) such as stearic acid are preferable, and a combination of the petroleum-based softener and the C₈₋₂₄ fatty acids are particularly preferable.

When the softener (G) is the combination of the petroleum-based softener and the C₈₋₂₄ fatty acids, a proportion of the C₈₋₂₄ fatty acids is, for example, 1 to 100 parts by mass, preferably 3 to 80 parts by mass, more preferably 5 to 50 parts by mass, and still more preferably 10 to 30 parts by mass with respect to 100 parts by mass of the petroleum-based softener.

A proportion of the softener (G) may be 10 parts by mass or less (for example, 0.1 to 10 parts by mass, particularly 5 parts by mass or less) with respect to 100 parts by mass of the polymer component (A), and is, for example, 0 to 8 parts by mass, preferably 0.1 to 6 parts by mass, more preferably 0.3 to 5 parts by mass, still more preferably 0.5 to 4 parts by mass, and most preferably 1 to 3 parts by mass, from the viewpoint of improving the lateral pressure resistance and the wear resistance.

### (H) Inorganic Filler (Filler)

The rubber composition may further contain an inorganic filler (H). Examples of the inorganic filler (H) include carbonaceous materials (carbon black, graphite, and the like), metal compounds or synthetic ceramics (metal oxides such as magnesium oxide, calcium oxide, barium oxide, iron oxide, copper oxide, zinc oxide, titanium oxide, and aluminum oxide, metal silicates such as calcium silicate and aluminum silicate, metal carbides such as silicon carbide and tungsten carbide, metal nitrides such as titanium nitride, aluminum nitride, and boron nitride, metal carbonates such as magnesium carbonate and calcium carbonate, metal sulfates such as calcium sulfate and barium sulfate, and the like), mineral materials (such as zeolite, diatomaceous earth, calcined diatomaceous earth, activated clay, alumina, silica, talc, mica, kaolin, sericite, bentonite, montmorillonite, smectite, and clay), and the like. These inorganic fillers may be used alone or in combination of two or more kinds thereof.

Among these inorganic fillers, the carbonaceous materials such as carbon black (first carbon black), the metal oxides (first metal oxide) such as magnesium oxide and zinc oxide, and the mineral materials such as silica (first silica) are preferable, and the cured product of the rubber composition particularly preferably contains at least the carbon black from the viewpoint of improving hardness, modulus, and wear resistance.

Examples of the carbon black include SAF, ISAF, HAF, FEF, GPF, and HMF. These kinds of carbon black may be used alone or in combination of two or more kinds thereof. Among these, HAF is preferable from the viewpoint that the balance between the reinforcing effect and the dispersibility is good and the wear resistance can be improved.

An average particle diameter of the carbon black can be selected from a range of, for example, about 5 nm to 200 nm, and is, for example, about 10 nm to 150 nm, preferably about 15 nm to 100 nm, and more preferably about 20 nm to 80 nm (particularly 30 nm to 50 nm). If the average particle diameter of the carbon black is too small, the uniform dispersion may be difficult, and if the average particle diameter is too large, the hardness, modulus, and wear resistance may deteriorate.

Examples of the silica include dry silica, wet silica, and surface-treated silica. The silica can be classified into, for example, dry-method white carbon, wet-method white carbon, colloidal silica, precipitated silica, gel-method silica (silica gel), and the like, depending on the production method. These kinds of silica may be used alone or in combination of two or more kinds thereof. Among these, the wet-method white carbon containing hydrous silicic acid as a main component is preferable from the viewpoint of a large number of surface silanol groups and a strong chemical bonding force with rubber.

An average particle diameter of the silica is, for example, 1 nm to 1000 nm, preferably 3 nm to 300 nm, more preferably 5 nm to 100 nm, and still more preferably 10 nm to 50 nm. If the particle diameter of the silica is too large, the mechanical properties of the rubber may deteriorate, and if the particle diameter is too small, the uniform dispersion may be difficult.

The silica may be non-porous or porous, but a nitrogen adsorption specific surface area by the BET method is, for example, 50 m²/g to 400 m²/g, preferably 70 m²/g to 350 m²/g, more preferably 100 m²/g to 300 m²/g, and still more preferably 150 m²/g to 250 m²/g. If the specific surface area is too large, the uniform dispersion may be difficult, and if the specific surface area is too small, the mechanical properties of the rubber may deteriorate.

A total proportion of the inorganic filler (H) can be selected from a range of about 10 to 150 parts by mass with respect to 100 parts by mass of the polymer component (A), and is, for example, 40 to 100 parts by mass, preferably 50 to 90 parts by mass, and more preferably 70 to 80 parts by mass. If the proportion of the inorganic filler (H) is too small, the hardness, modulus, and wear resistance may deteriorate in the cured product of the rubber composition. Conversely, if the proportion is too large, the bending fatigue resistance may deteriorate.

When the inorganic filler (H) contains the carbon black and the metal oxides, a proportion of the metal oxides is, for example, 1 to 100 parts by mass, preferably 3 to 50 parts by mass, more preferably 5 to 30 parts by mass, and most preferably 10 to 20 parts by mass with respect to 100 parts by mass of the carbon black.

### (I) Other Components

The rubber composition may further contain other components (I). Examples of other components (I) include commonly-used additives blended with rubber, such as a crosslinking retardant, an age resister (such as an antioxidant, a thermal age resister, an antiflex-cracking agent, and an antiozonant), a colorant, a tackifier, a lubricant, a coupling agent (such as a silane coupling agent), a stabilizer (such as an ultraviolet absorber and a thermal stabilizer), a flame retardant, and an antistatic agent. These additives may be used alone or in combination of two or more kinds thereof. Among these, the age resister (first age resister) or the like is widely used.

A total proportion of other components (I) is, for example, 0.1 to 15 parts by mass, preferably 0.3 to 10 parts by mass, and more preferably 0.5 to 7 parts by mass with respect to 100 parts by mass of the polymer component (A). A proportion of the age resister is, for example, 0.1 to 5 parts by mass, preferably 0.2 to 3 parts by mass, and more preferably 0.3 to 1 part by mass with respect to 100 parts by mass of the polymer component (A).

### (J) Properties of Cured Product of Rubber Composition

The cured product of the rubber composition also has an elongation at break necessary for the power transmission V-belt even though the rubber hardness and the modulus are large. That is, the cured product can achieve both improvement in the rubber hardness and modulus and the bending fatigue resistance which are in a trade-off relationship. For example, in Patent Literature 1, examples with high hardness have a low elongation at break, and examples with a high elongation at break have low hardness, and these physical properties cannot be achieved at the same time. On the other hand, in the present invention, by achieving these physical properties at the same time, the lateral pressure resistance, the wear resistance, and the bending fatigue resistance can be enhanced at the same time, and the durability of the power transmission V-belt can be improved.

Specifically, the rubber hardness (JIS-A) of the cured product of the rubber composition [short fiber-containing rubber hardness in the cured product containing the short fibers (C)] is 91 degrees or more, and is, for example, 91 degrees to 98 degrees, preferably 91.5 degrees to 97 degrees, more preferably 92 degrees to 96 degrees, still more preferably 92.5 degrees to 95 degrees, and most preferably 93 degrees to 94 degrees. If the short fiber-containing rubber hardness is too low, the lateral pressure resistance and the wear resistance decrease.

The cured product of the rubber composition has high rubber hardness (matrix rubber hardness) of the cured product of the rubber composition excluding the short fibers (C) [rubber composition not containing the short fibers (C)]. The matrix rubber hardness (JIS-A) may be 83 degrees or more, and is, for example, 83 degrees to 95 degrees, preferably 83.5 degrees to 93 degrees, more preferably 84 degrees to 90 degrees, still more preferably 85 degrees to 89 degrees, and most preferably 86 degrees to 88 degrees. If the matrix rubber hardness is too low, the lateral pressure resistance and the wear resistance may deteriorate.

A difference between the short fiber-containing rubber hardness and the matrix rubber hardness may be 10 degrees or less, preferably 9.5 degrees or less, more preferably 9 degrees or less, still more preferably 8 degrees or less, and most preferably 7 degrees or less. If the difference is too large, the wear resistance of the belt may deteriorate.

In the present application, the rubber hardness (JIS-A) is measured in accordance with JIS K 6253 (2012) for a cured product obtained by press-crosslinking at a temperature of 170°C and a pressure of 2 MPa for 20 minutes, and is measured in detail by the methods described in Examples described later.

The elongation at break in the belt longitudinal direction of the cured product [cured product containing the short fibers (C)] of the rubber composition is 100% or more, and is, for example, 100% to 200%, preferably 101% to 180%, more preferably 102% to 160%, still more preferably 103% to 150%, and most preferably 104% to 130%. If the elongation at break is too small, the bending fatigue resistance deteriorates.

In the present application, the elongation at break is measured in accordance with JIS K 6251 (2017), and is measured in detail by the methods described in Examples described later.

The cured product [cured product containing the short fibers (C)] of the rubber composition has excellent lateral pressure resistance and high 8% bending stress. The 8% bending stress may be 5 MPa or more, and is, for example, 5 MPa to 30 MPa, preferably 5.5 MPa to 20 MPa, more preferably 6 MPa to 15 MPa, still more preferably 6.5 MPa to 10 MPa, and most preferably 7 MPa to 9 MPa.

In the present application, the 8% bending stress is measured by the methods described in Examples described later.

### [Power Transmission V-Belt]

The power transmission V-belt of the present invention may be either a wrapped V-belt or a raw-edge type V-belt, but from the viewpoint of ensuring the lateral pressure resistance and improving the bending fatigue resistance, a raw-edge type V-belt is preferable.

The raw-edge type V-belt includes a raw-edge V-belt and a raw-edge cogged V-belt. Further, the raw-edge cogged V-belt can be roughly classified into a raw-edge cogged V-belt in which cogs are formed only on an inner circumferential side of the raw-edge V-belt, and a raw-edge double cogged V-belt in which cogs are formed on both the inner circumferential side and an outer circumferential side of the raw-edge V-belt. Among these, the raw-edge cogged V-belt and the raw-edge double cogged V-belt are preferable from the viewpoint of being required to satisfy both lateral pressure resistance and bending fatigue resistance at a high level, and the raw-edge double cogged V-belt is particularly preferable from the viewpoint of being used in a more severe situation and required to have a higher level. The cogged V-belt is a V-belt in which a side surface of a compression rubber layer is in contact with a pulley, and a variable speed belt used in a transmission in which a transmission gear ratio changes continuously during belt running is particularly preferable. The raw-edge type V-belt used in a layout including reverse bending is also preferable.

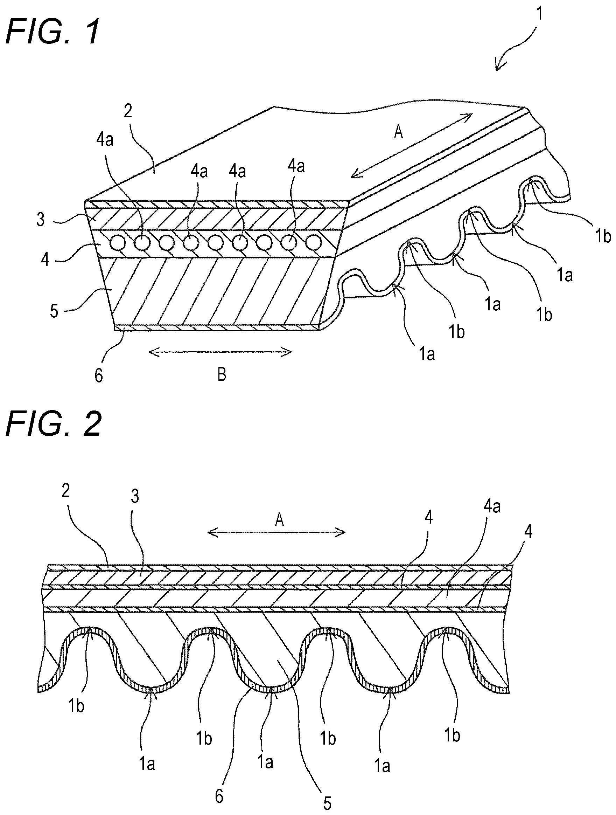

FIG. 1 is a schematic partial cross-sectional perspective view illustrating an example of a raw-edge cogged V-belt of the present invention, and FIG. 2 is a schematic cross-sectional view of the raw-edge cogged V-belt of FIG. 1 cut in a belt longitudinal direction.

In the example, a raw-edge cogged V-belt 1 has a cog portion formed by alternately arranging a cog ridge 1a and a cog valley 1b along a longitudinal direction (direction A in the figure) of the belt on an inner circumferential surface of a belt body, a cross-sectional shape in the longitudinal direction of the cog ridge 1a is a substantially semicircular shape (curved shape or wave shape), and a cross-sectional shape in a direction (width direction or direction B in the figure) orthogonal to the longitudinal direction is a trapezoidal shape. That is, each cog ridge 1a protrudes with a substantially semicircular shape in the cross section of the direction A from each of the cog valley 1b in a belt thickness direction. The raw-edge cogged V-belt 1 has a laminated structure, and a first reinforcing fabric 2, a tension rubber layer 3, an adhesive rubber layer 4, a compression rubber layer 5, and a second reinforcing fabric 6 are sequentially laminated from the outer circumferential side of the belt toward the inner circumferential side (the side where the cog portion is formed) of the belt. The cross-sectional shape in the belt width direction is a trapezoidal shape in which a belt width decreases from the outer circumferential side of the belt toward the inner circumferential side of the belt. Further, a core body 4a is embedded in the adhesive rubber layer 4, and the cog portion is formed on the compression rubber layer 5 by a molding die with cogs.

A height of the cog portion and a pitch between cog portions are the same as those of the commonly-used cogged V-belt. In the compression rubber layer, the height of the cog portion (height of the cog ridge with respect to the cog valley) is about 50% to 95% (particularly 60% to 80%) with respect to a thickness of the entire compression rubber layer, and the pitch between the cog portions (distance between central portions of adjacent cog portions) is about 50% to 250% (particularly 80% to 200%) with respect to the height of the cog portion. The same applies to a case where the cog portion is formed on the tension rubber layer.

A thickness (average thickness) of the entire belt of the raw-edge type V-belt of the present invention may be 8 mm or more, and is, for example, 8 mm to 50 mm, preferably 9 mm to 45 mm (particularly 10 mm to 40 mm), and more preferably 10 mm to 36 mm (particularly 11 mm to 32 mm). The thickness range may be selected depending on the intended use, and in the raw-edge type V-belt used in a motorcycle, a snowmobile, or the like, the thickness of the entire belt is, for example, 8 mm to 18 mm, preferably 10 mm to 14 mm, and more preferably 11 mm to 13 mm. In the raw-edge type V-belt (in particular, the variable speed belt) used in a large agricultural machine, the thickness of the entire belt may be 18 mm or more, and is, for example, 18 mm to 40 mm, preferably 19 mm to 38 mm, more preferably 19.8 mm to 36 mm, and still more preferably 19.8 mm to 30.5 mm. The raw-edge type V-belt of the present invention is particularly suitable for a raw-edge type V-belt having a large thickness of 18 mm or more because both lateral pressure resistance and bending fatigue resistance can be achieved at the same time. If the thickness is too small, the lateral pressure resistance may deteriorate, and if the thickness is too large, the bendability may deteriorate, transmission efficiency may be reduced, and the bending fatigue resistance may deteriorate.

In the present application, in the case where the compression rubber layer and/or the tension rubber layer has the cog portion, the thickness of the entire belt means a thickness (maximum thickness of the belt) at a top portion of the cog portion.

In the raw-edge type V-belt of the present invention, it is preferable that the compression rubber layer and/or the tension rubber layer is formed of the cured product of the rubber composition, it is more preferable that at least the compression rubber layer is formed of the cured product of the rubber composition, and it is still more preferable that both the compression rubber layer and the tension rubber layer are formed of the cured product of the rubber composition.

### (Adhesive Rubber Layer)

The raw-edge type V-belt of the present invention may not include an adhesive rubber layer, but the raw-edge type V-belt preferably includes an adhesive rubber layer from the viewpoint that the adhesion between the core body and the compression rubber layer and between the core body and the tension rubber layer (or a tension rubber layer body) can be enhanced to prevent peeling between the core body and the layers. The adhesive rubber layer may be formed of a rubber composition (second rubber composition) containing a polymer component (a) containing an ethylene-α-olefin elastomer and a crosslinking agent (b) containing a sulfur-based crosslinking agent.

### (a) Polymer Component

The ethylene-α-olefin elastomer (second ethylene-α-olefin elastomer) can be selected from ethylene-α-olefin elastomers exemplified in the section of the polymer component (A), including a preferred aspect (aspect other than diene content).

A diene content of the second ethylene-α-olefin elastomer (particularly, ethylene-α-olefin-diene terpolymer rubber such as EPDM) may be 15 mass% or less (for example, 0.5 mass% to 15 mass%), preferably 10 mass% or less (for example, 1 mass% to 10 mass%), more preferably 8 mass% or less (for example, 3 mass% to 8 mass%), still more preferably 7 mass% or less (for example, 3.5 mass% to 7 mass%), and most preferably 5 mass% or less (for example, 4 mass% to 5 mass%). If the diene content is too large, high heat resistance may not be ensured.

The polymer component (a) may also contain other rubber components in addition to the second ethylene-α-olefin elastomer. The other rubber components and proportions thereof [proportions in the polymer component (B)] can be selected from the other rubber components and proportions thereof exemplified in the section of the polymer component (A).

### (b) Crosslinking Agent

A sulfur-based crosslinking agent (second sulfur-based crosslinking agent) can be selected from the sulfur-based crosslinking agents exemplified in the section of the crosslinking agent (B), including a preferred aspect.

A proportion of the second sulfur-based crosslinking agent is, for example, 0.1 to 5 parts by mass, preferably 0.3 to 3 parts by mass, more preferably 0.5 to 1.5 parts by mass, still more preferably 0.6 to 1.3 parts by mass, and most preferably 0.8 to 1.2 parts by mass with respect to 100 parts by mass of the polymer component (a). If the proportion of the sulfur-based crosslinking agent is too small, the rubber hardness and the lateral pressure resistance may deteriorate, and if the proportion is too large, the sulfur-based crosslinking agent tends to bloom on a surface of an uncrosslinked rubber sheet, which may cause contamination and may reduce the adhesiveness.

The crosslinking agent (b) may also contain an organic peroxide in addition to the second sulfur-based crosslinking agent. The organic peroxide and a proportion thereof can be selected from the organic peroxides and the proportions thereof exemplified in the section of the crosslinking agent (B).

A proportion of the second sulfur-based crosslinking agent in the crosslinking agent (b) may be 50 mass% or more, preferably 70 mass% or more, more preferably 90 mass% or more, and still more preferably 100 mass%.

A proportion of the crosslinking agent (b) is, for example, 0.1 to 5 parts by mass, preferably 0.3 to 3 parts by mass, more preferably 0.5 to 1.5 parts by mass, still more preferably 0.6 to 1.3 parts by mass, and most preferably 0.8 to 1.2 parts by mass with respect to 100 parts by mass of the polymer component (a).

### (c) Short Fibers

The second rubber composition may further contain short fibers (c). The short fibers (c) can be selected from the short fibers exemplified in the section of the short fibers (C), including a preferred aspect (aspect other than the proportion).

A proportion of the short fibers (c) is, for example, 100 parts by mass or less, preferably 50 parts by mass or less, and more preferably 10 parts by mass or less with respect to 100 parts by mass of the polymer component (a). The second rubber composition preferably does not substantially contain the short fibers (c), and more preferably does not contain the short fibers (c).

### (d) Crosslinking Accelerator

The second rubber composition may further contain a crosslinking accelerator (d). The crosslinking accelerator (d) can be selected from the crosslinking accelerators exemplified in the section of the crosslinking accelerator (D), including a preferred aspect (aspect other than the proportion).

In a case where the crosslinking accelerator (d) is a combination of a sulfur-containing crosslinking accelerator (particularly, a thiomorpholine accelerator) having an oxygen-and-nitrogen-containing heterocycle and another sulfur-containing crosslinking accelerator (particularly, a thiuram accelerator and/or a sulfenamide accelerator), a mass ratio of the two is the former/latter = 1/99 to 90/10, preferably 5/95 to 70/30, more preferably 10/90 to 50/50, and still more preferably 20/80 to 30/70.

A proportion [proportion in the crosslinking accelerator (d)] of the sulfur-containing accelerator (second sulfur-containing accelerator) contained in the crosslinking accelerator (d) can be selected from the proportions of the first sulfur-containing accelerator, including a preferred aspect.

A proportion of the crosslinking accelerator (d) is, for example, 0.1 to 10 parts by mass, preferably 0.3 to 7 parts by mass, more preferably 0.5 to 5 parts by mass, still more preferably 1 to 3 parts by mass, and most preferably 1.5 to 2.5 parts by mass with respect to 100 parts by mass of the polymer component (a).

### (e) Co-crosslinking Agent

The second rubber composition may further contain a co-crosslinking agent (e). The co-crosslinking agent (e) can be selected from the co-crosslinking agents exemplified in the section of the co-crosslinking agent (E), including a preferred aspect (aspect other than the proportion).

A proportion of the co-crosslinking agent (e) is, for example, 100 parts by mass or less, preferably 50 parts by mass or less, and more preferably 10 parts by mass or less with respect to 100 parts by mass of the polymer component (a). The second rubber composition preferably does not substantially contain the co-crosslinking agent (e), and more preferably does not contain the co-crosslinking agent (e).

### (1) Adhesiveness Improver

The second rubber composition may further contain an adhesiveness improver (f). The adhesiveness improver (1) can be selected from the adhesiveness improvers exemplified in the section of the adhesiveness improver (F).

Among the adhesiveness improvers, as the adhesiveness improver (f), a resorcinol-formaldehyde resin and a melamine resin are preferable, and a combination of the resorcinol-formaldehyde resin and the melamine resin is particularly preferable.

In a case where the adhesiveness improver (f) is a combination of a resorcinol-formaldehyde resin and a melamine resin, a proportion of the resorcinol-formaldehyde resin can be selected from a range of about 10 to 1000 parts by mass with respect to 100 parts by mass of the melamine resin, and is, for example, 20 to 300 parts by mass, preferably 30 to 100 parts by mass, and more preferably 50 to 80 parts by mass.

A proportion of the adhesiveness improver (1) can be selected from a range of, for example, about 0.1 to 30 parts by mass with respect to 100 parts by mass of the polymer component (a), and is, for example, 0.5 to 20 parts by mass, preferably 1 to 15 parts by mass, more preferably 2 to 10 parts by mass, and still more preferably 3 to 8 parts by mass.

### (g) Softener

The second rubber composition may further contain a softener (g). The softener (g) can be selected from the softeners exemplified in the section of the softener (G). Among the softeners, a petroleum-based softener such as paraffinic oil is preferable as the softener (g).

A proportion of the softener (g) may be 1 part by mass or more with respect to 100 parts by mass of the polymer component (a), and is, for example, 1 to 50 parts by mass, preferably 2 to 30 parts by mass, more preferably 3 to 20 parts by mass, still more preferably 5 to 15 parts by mass, and most preferably 8 to 12 parts by mass, from the viewpoint of improving the adhesiveness.

### (h) Inorganic Filler

The second rubber composition may further contain an inorganic filler (h). The inorganic filler (h) can be selected from the inorganic fillers exemplified in the section of the inorganic filler (H).

Among the inorganic fillers, as the inorganic filler (h), a carbonaceous material such as carbon black, a mineral material such as silica, or a metal oxide such as zinc oxide is preferable, and a combination of the carbon black (second carbon black), the silica (second silica), and the metal oxide (second metal oxide) is particularly preferable from the viewpoint of achieving both mechanical properties and adhesiveness of the cured product of the rubber composition.

The second carbon black can be selected from the first carbon black exemplified in the section of the inorganic filler (H). Among the carbon black, the second carbon black is preferably FEF from the viewpoint of adhesiveness and the like. An average particle diameter of the second carbon black can be selected from the average particle diameter of the first carbon black, including a preferred aspect.

The second silica can be selected from the first silica exemplified in the section of the inorganic filler (H), including a preferred aspect.

A proportion of the second silica is, for example, 5 to 200 parts by mass, preferably 10 to 100 parts by mass, more preferably 30 to 80 parts by mass, and still more preferably 40 to 60 parts by mass with respect to 100 parts by mass of the second carbon black. If the proportion of the silica is too small, an effect of improving the adhesiveness may not be exhibited.

A proportion of the second metal oxide is, for example, 1 to 100 parts by mass, preferably 3 to 50 parts by mass, more preferably 5 to 30 parts by mass, and most preferably 10 to 20 parts by mass with respect to 100 parts by mass of the second carbon black.

A total proportion of the inorganic filler (h) can be selected from a range of about 10 to 100 parts by mass with respect to 100 parts by mass of the polymer component (a), and is, for example, 20 to 80 parts by mass, preferably 30 to 70 parts by mass, and more preferably 40 to 60 parts by mass. If the proportion of the inorganic filler is too small, the elastic modulus may become insufficient and the lateral pressure resistance may deteriorate, and if the proportion is too large, the elastic modulus may become too large and the bending fatigue resistance may deteriorate.

### (i) Other Components

The second rubber composition may further contain other components (i). The other components (i) can be selected from the other components exemplified in the section of the other components (I).

A total proportion of other components (i) is, for example, 0.1 to 15 parts by mass, preferably 0.3 to 10 parts by mass, and more preferably 0.5 to 7 parts by mass with respect to 100 parts by mass of the polymer component (a). A proportion of an age resister (second age resister) is, for example, 0.1 to 10 parts by mass, preferably 0.5 to 5 parts by mass, and more preferably 1 to 3 parts by mass with respect to 100 parts by mass of the polymer component (a).

### [Core Body]

The core body is not particularly limited, but core wires (twisted cords) arranged at a predetermined interval in the belt width direction can be used usually. The core wires are arranged to extend in the longitudinal direction of the belt, and are usually arranged to extend in parallel at a predetermined pitch parallel to the longitudinal direction of the belt. At least a part of the core wires is in contact with the adhesive rubber layer, and may be in any form of a form in which the core wire is embedded in the adhesive rubber layer, a form in which the core wire is embedded between the adhesive rubber layer and the tension rubber layer, and a form in which the core wire is embedded between the adhesive rubber layer and the compression rubber layer. Among these, the form in which the core wire is embedded in the adhesive rubber layer is preferable from the viewpoint of improving durability. In the case of a V-belt having no adhesive rubber layer, the form in which the core wire is embedded between the tension rubber layer and the compression rubber layer may be employed.

As a material of fibers constituting the core wire, for example, the material of the short fibers exemplified in the section of the short fibers (C) can be used. Among the fibers having the above material, synthetic fibers such as polyester fibers (polyalkylene allylate fibers) having C₂₋₄ alkylene-allylate such as ethylene terephthalate and ethylene-2,6-naphthalate as main structural units and aramid fibers, inorganic fibers such as carbon fibers, and the like are widely used from the viewpoint of high modulus, and the polyester fibers (polyethylene terephthalate fibers, polyethylene naphthalate fibers, and the like) and polyamide fibers are preferable.

As the core wire, generally, a twisted cord using a multifilament yarn (for example, a piled cord, a single twist cord or Lang lay cord) can be used. The total fineness of the twisted cord may be, for example, 2200 dtex to 13500 dtex (particularly 6600 dtex to 11000 dtex). The twisted cord may contain, for example, 1000 to 10000 monofilaments, preferably 2000 to 8000 monofilaments, and more preferably 4000 to 6000 monofilaments. An average wire diameter (diameter of the twisted cord) of the core wire may be, for example, about 0.5 mm to 3 mm, preferably about 0.6 mm to 2 mm, and more preferably about 0.7 mm to 1.5 mm.

In order to improve the adhesiveness to the rubber component, the core wire may be subjected to an adhesion treatment (or a surface treatment) in the same manner as the short fibers. The core wire is preferably subjected to an adhesion treatment with at least an RFL liquid.

### [Reinforcing Fabric]

In a case where the raw-edge type V-belt of the present invention includes a reinforcing fabric, for example, a form in which the reinforcing fabric is laminated on both (an inner circumferential surface of the compression rubber layer and an outer circumferential surface of the tension rubber layer) the compression rubber layer and the tension rubber layer (cogs in a case where the cogs are integrally formed with the compression rubber layer), a form in which the reinforcing fabric is laminated on a surface of either one of the compression rubber layer and the tension rubber layer, a form in which the reinforcing layer is embedded in the compression rubber layer and/or the tension rubber layer (for example, a form described in JP2010-230146A), and the like are exemplified. In many cases, the reinforcing fabric is laminated on a surface (the inner circumferential surface of the compression rubber layer and the outer circumferential surface of the tension rubber layer) of at least one of the compression rubber layer and the tension rubber layer, for example, the reinforcing fabric is laminated on both the inner circumferential surface (lower surface) of the compression rubber layer and the outer circumferential surface (upper surface) of the tension rubber layer.

The reinforcing fabric may be formed of, for example, a fabric material (particularly woven fabric) such as woven fabric, wide angle canvas, knitted fabric, and nonwoven fabric, and if necessary, may be laminated or embedded in the compression rubber layer and/or the tension rubber layer in the above forms after the adhesion treatment, for example, treatment with an RFL liquid (immersion treatment or the like), friction treatment in which an adhesive rubber is rubbed into the fabric material, or lamination (coating) of the adhesive rubber and the fabric material.

### [Method for Producing Power Transmission V-belt]

The method for producing the power transmission V-belt of the present invention is not particularly limited, and a commonly-used method can be used. In the case of the raw-edge cogged V-belt, for example, a laminate formed of a reinforcing fabric (lower fabric) and a compression rubber layer sheet (uncrosslinked rubber sheet) may be arranged in a flat cogged mold in which tooth portions and groove portions are alternatively provided, in the state of the reinforcing fabric facing down, and pressurized at a temperature of about 60°C to 100°C (particularly 70°C to 80°C) to prepare a cog pad having cog portions embossed (which is not completely crosslinked and is in a semi-crosslinked state), and then both ends of the cog pad may be vertically cut from the top of a cog ridge portion. Further, a cylindrical mold may be covered with an inner mother mold (mold formed of a crosslinked rubber) having tooth portions and groove portions alternately provided, the cog pad may be wound by engaging with the tooth portions and the groove portions to joint at the top of the cog ridge portion, a first adhesive rubber layer sheet (lower adhesive rubber: uncrosslinked rubber sheet) may be laminated on the wound cog pad, the core wire (twisted cord) for forming the core body may be spun spirally, and a second adhesive rubber layer sheet (upper adhesive rubber: the same as the adhesive rubber layer sheet), a tension rubber layer sheet (uncrosslinked rubber sheet), and a reinforcing fabric (upper fabric) may be sequentially wound thereon to prepare a molded article. Thereafter, after a crosslinking step of arranging the mold in a vulcanization can with covering the mold with a jacket (jacket formed of a crosslinked rubber) and performing crosslinking at a temperature of 120°C to 200°C (particularly 150°C to 180°C) to prepare a belt sleeve, a cutting step of cutting the belt sleeve so as to have a V-shaped cross section using a cutter or the like to form a compression rubber layer may be performed.

In the raw-edge cogged V-belt not including the reinforcing fabric, a laminate obtained by pressurizing the compression rubber layer sheet and the first adhesive rubber layer sheet in advance may be prepared.

Examples of a method for orienting an orientation direction of short fibers in a belt width direction in the tension rubber layer sheet and the compression rubber layer sheet include a commonly-used method, for example, a method in which a rubber is passed through a pair of calender rolls with a predetermined gap and rolled into a sheet shape, both side surfaces of the rolled sheet in which the short fibers are oriented in a rolling direction are cut in a direction parallel to the rolling direction, the rolled sheet is cut in a direction perpendicular to the rolling direction so as to have a belt molding width (length in the belt width direction), and the side surfaces cut in the direction parallel to the rolling direction are jointed. For example, the method described in JP2003-14054A can be used. The uncrosslinked sheet in which the short fibers are oriented by such a method is crosslinked by arranging the short fibers such that the orientation direction of the short fibers is the belt width direction in the above method.

### [Examples]

Hereinafter, the present invention will be described in more detail based on Examples, but the present invention is not limited to these Examples. Details of raw materials used in Examples are shown below.

### [Raw Material]

(Polymer Component)
EPDM 1: "EP93" manufactured by JSR Corporation, ethylene content: 55 mass%, diene content: 2.7 mass%
EPDM 2: "EP24" manufactured by JSR Corporation, ethylene content: 54 mass%, diene content: 4.5 mass%.

### (Crosslinking Agent, Crosslinking Accelerator, and Crosslinking Aid)

Sulfur: "Powdered Sulfur" manufactured by Miwon Chemical Co., Ltd.
Organic peroxide: "P-40 MB (K)" manufactured by NOF Corporation
Crosslinking accelerator A: "Nocceler TT" manufactured by Ouchi Shinko Chemical Industrial Co., Ltd.
Crosslinking accelerator B: "Nocceler CZ" manufactured by Ouchi Shinko Chemical Industrial Co., Ltd.
Crosslinking accelerator C: "Vulnoc R" manufactured by Ouchi Shinko Chemical Industrial Co., Ltd.
Co-crosslinking agent A (bismaleimide): "Vulnoc PM" manufactured by Ouchi Shinko Chemical Industrial Co., Ltd.
Co-crosslinking agent B (zinc methacrylate): "San-ester SK-30" manufactured by Sanshin Chemical Industry Co., Ltd.

### (Fiber Member)

Para-aramid short fiber: Twaron cut yarns, manufactured by Teijin Limited, average fiber length: 3 mm
Nylon short fiber: Leona cut yarns, manufactured by Asahi Kasei Corporation, average fiber length: 3 mm
Core wire: piled cords having total fineness of 10,080 dtex, obtained by first twisting aligned two multifilament bundles of an aramid fiber having fineness of 1,680 dtex to produce a first twisted yarn, and secondarily twisting three of the produced first twisted yarns together in an opposite direction to the first twist.
Reinforcing fabric: nylon canvas with a construction of 2/2 twill weave (thickness: 0.50 mm).

### (Other Components)

Carbon black A (HAF): "N330" manufactured by Cabot Japan K.K.
Carbon black B (FEF): "N550" manufactured by Cabot Japan K.K.
Silica: "Ultrasil VN3" manufactured by Evonik Degussa Japan Co., Ltd., BET specific surface area: 175 m²/g
Paraffinic oil: "Diana Process Oil PW90" manufactured by Idemitsu Kosan Co., Ltd.
Age resister A: "Nocrac CD" manufactured by Ouchi Shinko Chemical Industrial Co., Ltd.
Age resister B: "Nonflex OD3" manufactured by Seiko Chemical Co., Ltd.
Zinc Oxide: "Zinc oxide (type II)" manufactured by Sakai Chemical Industry Co., Ltd.
Stearic acid: "STEARIC ACID CAMELLIA" manufactured by NOF Corporation
Magnesium oxide: "Kyowa Mag 150" manufactured by Kyowa Chemical Industry Co., Ltd.
Adhesiveness improver A (resorcinol-formaldehyde resin): "POWERPLAST PP-1860" manufactured by Singh Plasticisers & Resins Pvt. Ltd.
Adhesiveness improver B (hexa(methoxymethyl)melamine): "POWERPLAST PP-1890S" manufactured by Singh Plasticisers & Resins Pvt. Ltd.

### Examples 1 to 9 and Comparative Examples 1 to 4

### [Rubber Hardness]

An uncrosslinked rubber sheet having a composition shown in Table 1 was press-crosslinked at a temperature of 170°C, a pressure of 2 MPa, and a time of 20 minutes to produce a crosslinked rubber sheet (100 mm × 100 mm × 2 mm thickness). The rubber hardness was measured in accordance with JIS K 6253 (2012) using a durometer A type hardness tester by using a laminate obtained by stacking three crosslinked rubber sheets as a sample. The matrix rubber hardness was measured in the same manner, except that a crosslinked rubber sheet containing no short fibers was produced by excluding short fibers from the above composition. The results are shown in Table 3.

### [Elongation at Break]

An uncrosslinked rubber sheet having a composition shown in Table 1 was press-crosslinked at a temperature of 170°C, a pressure of 2 MPa, and a time of 20 minutes to produce a crosslinked rubber sheet (100 mm × 100 mm × 2 mm thickness). The crosslinked rubber sheet was punched out with a super dumbbell cutter manufactured by Dumbbell Co., Ltd. to prepare a dumbbell-shaped No. 3 test piece. An elongation at break was measured in accordance with JIS K 6251 (2017) using the prepared test piece. A tensile rate was 500 mm/min, and a test temperature was 23°C. The measurement was performed in a direction (direction perpendicular to the grain) in which a longitudinal direction of the test piece was perpendicular to the grain of the test piece (longitudinal direction of the short fibers). The results are shown in Table 3.

### [8% Bending Stress]

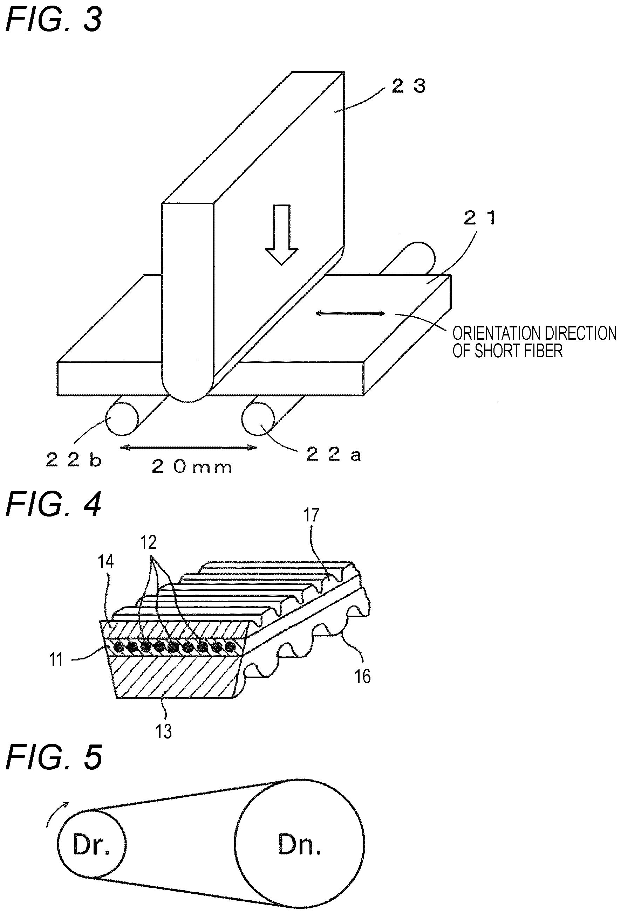

An uncrosslinked rubber composition having the composition shown in Table 1 was press-crosslinked at a temperature of 170°C, a pressure of 2 MPa, and a time of 20 minutes to produce a crosslinked rubber molded article (60 mm × 25 mm × 6.5 mm thickness). The short fibers were oriented parallel to a longitudinal direction of the crosslinked rubber molded article. As shown in FIG. 3, a crosslinked rubber molded article 21 was placed and supported on a pair of rotatable rolls (diameter of 6 mm) 22a and 22b with an interval of 20 mm, and a metal pressure member 23 was placed on a central portion of an upper surface of the crosslinked rubber molded article 21 in a width direction (direction orthogonal to the orientation direction of short fibers). A tip of the pressure member 23 has a semi-circular shape having a diameter of 10 mm, and the crosslinked rubber molded article 21 can be smoothly pressed by the tip. During pressing, friction force acts between a lower surface of the crosslinked rubber molded article 21 and the rolls 22a and 22b with compression deformation of the crosslinked rubber molded article 21, but the influence due to the friction is minimized by making the rolls 22a and 22b rotatable. A state in which the tip of the pressure member 23 is in contact with the upper surface of the crosslinked rubber molded article 21 but does not press was defined as an initial position, the pressure member 23 pressed downward the upper surface of the crosslinked rubber molded article 21 at a rate of 100 mm/min from the initial state, and a stress when bending strain reached 8% was measured as bending stress. By measuring the bending stress in the direction orthogonal to the orientation direction of the short fibers, when the bending stress increases, it can be judged that the resistance to buckling deformation called dishing during belt running is high, and the bending stress can be used as an index of high load transmission and high durability. The measurement temperature was assumed to be a belt temperature during running and was set to 120°C.

### [Presence or Absence of Bloom of Sheet]

An uncrosslinked rubber composition rolled into a sheet shape having a thickness of 2 mm was allowed to stand at 25°C for 14 days, and a rubber surface was visually observed to confirm the presence or absence of bloom (deposition on a sheet surface of an additive such as a crosslinking agent). Generally, there is no significant change in rubber physical properties even if the bloom occurs, but a decrease in tackiness may lead to a decrease in workability when forming a belt, and thus the bloom preferably does not occur.

### [Production of Belt]

A sheet-shaped cog pad obtained by forming a cog portion on a laminate was wrapped around a surface of an inner mother mold and jointed, the laminate being obtained by laminating a compression rubber layer sheet with a predetermined thickness having the composition shown in Table 1 and the reinforcing fabric in advance, and the inner mother mold being made of a crosslinked rubber, having a cog shape, and being attached to a mold. Next, a lower adhesive rubber sheet having a composition shown in Table 2, the core wire, an upper adhesive rubber sheet having the composition shown in Table 2, and the flat tension rubber layer sheet having the composition shown in Table 1 were sequentially wound to prepare a molded article. Subsequently, the surface of the molded article was covered with an outer mother mold made of a crosslinked rubber having a cog shape and a jacket, the mold was placed in a vulcanization can and was crosslinked at a temperature of 170°C, a time of 40 minutes, and a pressure of 0.9 MPa to obtain a belt sleeve. As the crosslinking conditions, conditions similar to crosslinking of the uncrosslinked adhesive rubber layer sheet, the compression rubber layer sheet, and the tension rubber layer sheet were selected. The sleeve was cut into a V shape with a cutter to prepare a variable speed belt. That is, a raw-edge double cogged V-belt having a structure shown in FIG. 4 was produced (the reinforcing fabric was not shown). Specifically, in the raw-edge double cogged V-belt in which a compression rubber layer 13 and a tension rubber layer 14 were respectively formed on both surfaces of an adhesive rubber layer 11 in which a core wire 12 was embedded, a belt (size: 20 mm upper width, 10 mm thickness, and 817 mm outer circumferential length) was produced in which cog portions 16 and 17 were respectively formed in both the compression rubber layer 13 and the tension rubber layer 14. The results of the following evaluation tests performed on the obtained raw-edge double cogged V-belt are shown in Table 3.

### [Biaxial Durability Running Test]

As shown in FIG. 5, the biaxial durability running test was conducted using a biaxial running tester including a drive (Dr.) pulley having a diameter of 50 mm and a driven (Dn.) pulley having a diameter of 125 mm. The raw-edge cogged V-belt was hung over each pulley, a load of 22.8 N·m was applied to the driven pulley, and the belt was run for 72 hours at an ambient temperature of 80°C at a revolution rate of the drive pulley of 5,600 rpm. A side surface (surface in contact with a pulley) of the raw-edge double cogged V-belt after running was visually observed, and the presence or absence of peeling between the core wire and the adhesive rubber layer was examined. The amount of change ([the upper width before the running test] - [the upper width after the running test]) in upper width of the raw-edge double cogged V-belt before and after the running test was acquired. It can be judged that the smaller the amount of change in upper width, the more excellent the wear resistance.

### [Reverse Bending Durability Running Test (Dynamic Reverse Bending Test)]

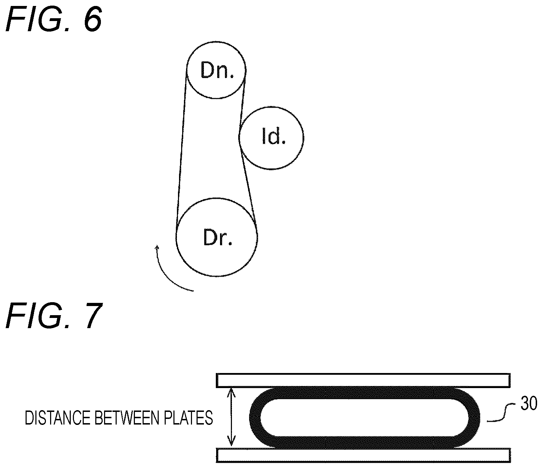

As shown in FIG. 6, the reverse bending durability running test was conducted using a triaxial running tester including a drive (Dr.) pulley having a diameter of 97.6 mm, a driven (Dn.) pulley having a diameter of 77.9 mm, and a rear idler (Id.) pulley having a diameter of 79.4 mm. The raw-edge double cogged V-belt was hung over each pulley, the belt was tensioned by hanging a weight of 40 kgf on the drive pulley, and a contact angle (central angle with respect to an arc in which the belt and the pulley are in contact with each other) in the rear idler pulley was adjusted to 15°. A revolution rate of the drive pulley was 3,600 rpm, the driven pulley and the rear idler pulley were with no load, and the belt was run at an ambient temperature of 120°C until the service life ends. The service life was judged when a depth (length in the belt thickness direction) of a crack in the cog valley of the raw-edge double cogged V-belt was 2 mm or more. It can be judged that the longer the running time until reaching the end of the service life, the more excellent the bending fatigue resistance.

### [Reverse Bending Crack Test (Static Reverse Bending Test)]

In the reverse bending crack test, as shown in FIG. 7, a raw-edge cogged V-belt 30 in a state in which an inner circumferential surface and an outer circumferential surface of the belt are reversed was sandwiched between two parallel flat plates above and below, a distance between the two flat plates was gradually narrowed at a speed of 50 mm/min, and a distance between plates when a crack was generated in a cog valley of the raw-edge double cogged V-belt was measured. It can be judged that the smaller the distance between plates when a crack occurs, the more excellent the bending fatigue resistance (crack resistance).

**Table 1**

| (For Compression Rubber Layer and Tension Rubber Layer) | | | | | | | | | | | | | |
|---|---|---|---|---|---|---|---|---|---|---|---|---|---|
| Composition (parts by mass) | Example | | | | | | | | | Comparative Example | | | |
| | 1 | 2 | 3 | 4 | 5 | 6 | 7 | 8 | 9 | 1 | 2 | 3 | 4 |
| EPDM1 | 100 | 100 | 100 | 100 | 100 | 100 | 100 | 100 | 100 | 100 | 100 | 100 | 100 |
| Para-aramid short fiber | 20 | 20 | 20 | 20 | 20 | 20 | 20 | 20 | 20 | 30 | 30 | 20 | 20 |
| Nylon short fiber | 10 | 10 | 10 | 10 | 10 | 10 | 10 | 10 | 10 | - | - | 10 | 10 |
| Carbon black A | 65 | 65 | 65 | 65 | 65 | 65 | 65 | 65 | 65 | 65 | 65 | 65 | 65 |
| Paraffinic oil | 5 | 1 | 1 | 1 | 1 | 1 | 1 | 1 | 1 | 10 | 10 | 5 | 1 |
| Age resister A | 0.5 | 0.5 | 0.5 | 0.5 | 0.5 | 0.5 | 0.5 | 0.5 | 0.5 | 1 | 1 | 0.5 | 0.5 |
| Age resister B | - | - | - | - | - | - | - | - | - | 1 | 1 | - | - |
| Zinc Oxide | 5 | 5 | 5 | 5 | 5 | 5 | 5 | 5 | 5 | 5 | 5 | 5 | 5 |
| Stearic acid | 1 | 1 | 1 | 1 | 1 | 1 | 1 | 1 | 1 | 2 | 2 | 1 | 1 |
| Magnesium oxide | 5 | 5 | 5 | 5 | 5 | 5 | 5 | 5 | 5 | 10 | 6 | 5 | 5 |
| Adhesiveness improver A | - | - | - | - | 2 | 2 | 2 | 2 | 2 | - | - | - | 2 |
| Crosslinking accelerator A | 0.5 | 0.5 | 0.5 | 0.5 | 0.5 | 0.5 | 0.5 | 0.5 | 0.5 | - | - | 0.5 | 0.5 |
| Crosslinking accelerator B | 0.5 | 0.5 | 0.5 | 0.5 | 0.5 | 0.5 | 0.5 | 0.5 | 0.5 | - | - | 0.5 | 0.5 |
| Crosslinking accelerator C | 1 | 1 | 2 | 2 | 2 | 2 | 2 | 2 | 2 | - | - | 1 | 2 |
| Co-crosslinking agent A | - | - | - | 2 | 2 | 2 | 2 | 1 | 3 | - | - | - | 6 |
| Co-crosslinking agent B | - | - | - | - | - | - | - | - | - | 15 | 10 | - | - |
| Sulfur | 2 | 2 | 2 | 2 | 2 | 1.5 | 3 | 2 | 2 | - | - | 1 | 2 |
| Organic peroxide | - | - | - | - | - | - | - | - | - | 5 | 5 | - | - |
| Total | 215.5 | 211.5 | 212.5 | 214.5 | 216.5 | 216 | 217.5 | 215.5 | 217.5 | 244 | 235 | 214.5 | 220.5 |

**Table 2**

| (For Adhesive Rubber Sheet) | |
|---|---|
| Composition | Parts by mass |
| EPDM2 | 100 |
| Carbon black B | 30 |
| Silica | 15 |
| Paraffinic oil | 10 |
| Age resister B | 2 |
| Zinc Oxide | 5 |
| Adhesiveness improver A | 2 |
| Adhesiveness improver B | 3 |
| Crosslinking accelerator A | 1 |
| Crosslinking accelerator B | 0.5 |
| Crosslinking accelerator C | 0.5 |
| Sulfur | 1 |
| Total | 170 |

**Table 3**

| | Example | | | | | | | | | Comparative Example | | | |
|---|---|---|---|---|---|---|---|---|---|---|---|---|---|
| | 1 | 2 | 3 | 4 | 5 | 6 | 7 | 8 | 9 | 1 | 2 | 3 | 4 |
| Matrix rubber hardness (°) | 83 | 84 | 84.5 | 86 | 87 | 86 | 88 | 86 | 87.5 | 83 | 81 | 79 | 88.5 |
| Short fiber-containing rubber hardness (°) | 91 | 92 | 92.5 | 93 | 93.5 | 92.5 | 94 | 92.5 | 94 | 93 | 91 | 90 | 95 |
| Elongation at break (%) | 150 | 130 | 125 | 105 | 105 | 110 | 102 | 115 | 103 | 70 | 90 | 160 | 95 |
| 8% bending stress (MPa) | 5.5 | 6.0 | 6.3 | 7.5 | 8.0 | 7.6 | 8.2 | 7.7 | 8.4 | 9.8 | 8.5 | 4.9 | 8.4 |
| Presence or absence of bloom of sheet | None | None | None | None | None | None | Bloom present | None | None | None | None | None | None |
| Biaxial durability running test Presence or absence of peeling | None | None | None | None | None | None | None | None | None | None | None | Peeling present | None |
| Biaxial durability running test Amount of change in upper width (mm) | 0.18 | 0.15 | 0.14 | 0.12 | 0.11 | 0.13 | 0.10 | 0.12 | 0.10 | 0.23 | 0.27 | 0.38 | 009 |
| Reverse bending durability running test Life running time (hrs) | 130 | 105 | 95 | 70 | 80 | 85 | 75 | 80 | 70 | 50 | 60 | 150 | 65 |
| Reverse bending crack test Distance between plates (mm) | 20 | 20 | 20 | 25 | 25 | 23 | 27 | 23 | 25 | 35 | 30 | 20 | 28 |

As is apparent from the results shown in Table 3, in Comparative Examples 1 and 2 in which crosslinking was performed with an organic peroxide, the rubber hardness was high, but the elongation at break was small, and in particular, the bending fatigue resistance was poor. In Comparative Example 3 in which the blending amount of sulfur was reduced, the rubber hardness was not sufficiently improved, the lateral pressure resistance was lowered, peeling occurred, and the wear resistance was also low. In Comparative Example 4 in which the blending amount of bismaleimide was increased, the elongation at break and the bending fatigue resistance were low.

In Examples 1 to 9, the rubber hardness was high, the elongation at break was large, both wear resistance and bending fatigue resistance were achieved, and the durability was excellent. In Example 1 in which the blending amount of the paraffinic oil was large, the wear resistance was slightly lowered. In Examples 4 to 9 in which the bismaleimide is contained as a co-crosslinking agent, the rubber hardness was particularly high, and the wear resistance was excellent.

From the comparison of Examples 5 to 7, the wear resistance tended to decrease when the blending amount of sulfur was small, and the bending fatigue resistance tended to decrease when the blending amount of sulfur was large. In Example 7 in which the blending amount of sulfur was large, the bloom occurred in the uncrosslinked rubber sheet. From the comparison of Examples 5, 8, and 9, when the blending amount of the bismaleimide of the co-crosslinking agent is small, the 8% bending stress and the wear resistance tended to decrease, and when the blending amount of the bismaleimide is large, the elongation at break and the bending fatigue resistance tended to decrease. In Comparative Example 4 in which the blending amount of the bismaleimide was further increased, the elongation at break and the bending fatigue resistance decreased to unacceptable levels.

### INDUS TRIAL APPLICABILITY

The power transmission V-belt of the present invention can be applied to a power transmission V-belt used in various fields of automobiles and industrial machines, for example, a V-belt such as a wrapped V-belt or a raw-edge type V-belt, and is preferably applied to the raw-edge type V-belt from the viewpoint of being able to improve bending fatigue resistance while securing lateral pressure resistance. As the raw-edge type V-belt, a raw-edge V-belt, a raw-edge cogged V-belt having a cog portion (such as a raw-edge cogged V-belt and a raw-edge double cogged V-belt) can be applied.

Further, the power transmission V-belt of the present invention is preferably applied to a V-belt (variable speed belt) used in a transmission (belt type continuously variable transmission) in which a transmission gear ratio changes continuously during belt running in a motorcycle, an ATV (four-wheeled buggy), a snowmobile, a large agricultural machine, or the like, or a raw-edge V-belt used in a layout including reverse bending from the viewpoint of achieving both lateral pressure resistance and bending fatigue resistance, and is particularly preferably applied to a variable speed belt (for example, a large belt corresponding to HL to HQ in ASABE standards) used in a large agricultural machine (such as a combine and a mower) requiring a high horsepower of 75 kW or more per belt from the viewpoint of achieving high lateral pressure resistance, wear resistance, and bending fatigue resistance.

Although the present invention has been described in detail with reference to specific embodiments, it is apparent to those skilled in the art that various changes and modifications can be made without departing from the spirit and scope of the present invention.

The present application is based on Japanese Patent Application No. 2021-022748 filed on February 16, 2021 and Japanese Patent Application No. 2022-005960 filed on January 18, 2022, and the content thereof is incorporated herein by reference.

### REFERENCE SIGNS LIST

1: power transmission V-belt
2, 6: reinforcing fabric
3: tension rubber layer
4: adhesive rubber layer
4a: core body
5: compression rubber layer

## Claims

1. A power transmission V-belt comprising a cured product of a first rubber composition,
wherein
the first rubber composition comprises a polymer component (A) comprising an ethylene-α-olefin elastomer, a crosslinking agent (B) comprising a sulfur-based crosslinking agent, and short fibers (C),
the short fibers (C) are oriented in a belt width direction,
the cured product has a rubber hardness (JIS-A) of 91 degrees or more, and
the cured product has an elongation at break in a belt longitudinal direction of 100% or more.

2. The power transmission V-belt according to claim 1, wherein a matrix rubber hardness (JIS-A) of a cured product of a rubber composition obtained by removing the short fibers (C) from the rubber composition is 83 degrees or more.

3. The power transmission V-belt according to claim 1 or 2, wherein the first rubber composition further comprises a crosslinking accelerator (D), and the crosslinking accelerator (D) comprises a sulfur-containing crosslinking accelerator.

4. The power transmission V-belt according to claim 3, wherein the sulfur-containing crosslinking accelerator comprises a sulfur-containing crosslinking accelerator having an oxygen-and-nitrogen-containing heterocycle.

5. The power transmission V-belt according to any one of claims 1 to 4, wherein the first rubber composition further comprises a co-crosslinking agent (E), and the co-crosslinking agent (E) comprises a bismaleimide compound.

6. The power transmission V-belt according to any one of claims 1 to 5, wherein the first rubber composition further comprises an adhesiveness improver (F).

7. The power transmission V-belt according to any one of claims 1 to 6, wherein a proportion of the sulfur-based crosslinking agent is 1.2 parts by mass or more with respect to 100 parts by mass of the polymer component (A).

8. The power transmission V-belt according to any one of claims 1 to 7, wherein the first rubber composition further comprises a softener (G), and a proportion of the softener (G) is 0.1 to 10 parts by mass with respect to 100 parts by mass of the polymer component (A).

9. The power transmission V-belt according to any one of claims 1 to 8, further comprising a compression rubber layer and/or a tension rubber layer which are formed of the cured product of the first rubber composition.

10. The power transmission V-belt according to any one of claims 1 to 9, further comprising an adhesive rubber layer formed of a cured product of a second rubber composition,
wherein
the second rubber composition comprises a polymer component (a) comprising an ethylene-α-olefin elastomer and a crosslinking agent (b) comprising a sulfur-based crosslinking agent.

11. The power transmission V-belt according to any one of claims 1 to 10, which is a raw-edge cogged V-belt having cogs on at least an inner circumferential surface side.

12. The power transmission V-belt according to any one of claims 1 to 11, which is a variable speed belt.

13. The power transmission V-belt according to any one of claims 1 to 12, having an average thickness of an entire belt of 19.8 mm to 36 mm.

14. The power transmission V-belt according to any one of claims 1 to 11, which is a raw-edge type V-belt used in a layout including reverse bending.
